# FASCICULE DE BREVET EUROPEEN

(11) **EP 2 622 228 B1**
(45) Date de publication et mention de la délivrance du brevet: **01.11.2017**
(21) Numéro de dépôt: 11771261.2
(22) Date de dépôt: 22.09.2011
(51) Int. Cl.: F15B 15/14, B64C 11/38

(54) **DISPOSITIF HYDRAULIQUE D'UN DISPOSITIF DE COMMANDE TEL QU'UN DISPOSITIF DE CHANGEMENT DE PAS D'HELICE**
HYDRAULISCHE VORRICHTUNG EINER STEUERVORRICHTUNG, WIE ETWA EINE SCHAUFELTEILUNGSÄNDERUNGSVORRICHTUNG
HYDRAULIC DEVICE OF A CONTROL DEVICE, SUCH AS A BLADE PITCH-CHANGE DEVICE

(30) Priorité: 27.09.2010 FR 1057755
(43) Date de publication de la demande: 07.08.2013
(73) Titulaire: Snecma, 75015 Paris (FR)
(72) Inventeur: BRETTES, Frédéric, F-77550 Moissy-cramayel Cedex (FR); LAVIE, Alain, François, Jean, F-77550 Moissy-cramayel Cedex (FR)
(74) Mandataire: Camus, Olivier Jean-Claude
(86) Numéro de dépôt international: PCT/FR2011/052193
(87) Numéro de publication internationale: WO 2012/045946

(56) Documents cités:
- WO-A1-93/03258
- GB-A- 2 365 073
- JP-A- 53 044 773
- US-A- 2 640 555

## Description

La présente invention concerne un dispositif hydraulique d'un dispositif de commande.

Le domaine de l'invention est celui de tout système muni d'une hélice, tel qu'une éolienne, un ventilateur industriel, mais aussi les turbomachines et les turboréacteurs munis d'une soufflante comprenant une pluralité d'aubes ou de pales à angles de calage variable.

D'une façon connue, une turbomachine comporte un ou plusieurs étages d'aubes à calage variable qui sont montés entre des roues de rotor d'un compresseur. Ces aubes à calage variable sont portées par le stator de la turbomachine et sont réglables en position autour de leur axe pour optimiser l'écoulement des gaz dans le moteur de la turbomachine. Ainsi, la variation du calage des aubes permet d'augmenter les performances et d'améliorer le rendement du moteur d'une turbomachine durant toutes les phases de son fonctionnement, du décollage à l'atterrissage.

Ce calage variable permet en outre de faire varier le régime de l'hélice ou de la soufflante pour obtenir la poussée désirée, sans modifier celui de la turbine qui est en général calé à son régime maximum continu, voire, lors de l'atterrissage, d'inverser cette poussée remplaçant ainsi les systèmes conventionnels lourds et complexes d'inversion de poussée.

Les dispositifs de commande de variation de pas d'hélices ou de soufflante sont des actionneurs hydrauliques (vérins entraînant chacun des pieds d'aubes) qui procurent la force nécessaire pour orienter les aubes dans la position désirée.

Chaque aube à calage variable comporte un pivot cylindrique à chacune de ses extrémités, ces pivots définissant l'axe de rotation de l'aube. Le pivot radialement externe de l'aube est engagé dans une cheminée
cylindrique d'un carter annulaire externe qui est relié au moyen d'une biellette à un anneau de commande monté autour du carter annulaire. L'anneau de commande est quant à lui relié par un levier à un arbre de commande actionné par un vérin hydraulique. De façon générale, l'arbre de commande s'étend parallèlement à l'axe du carter et peut être relié à un ou plusieurs anneaux de façon à commander un ou plusieurs étages d'aubes avec un seul vérin.

La tige du vérin hydraulique est reliée à l'arbre de commande par un bras radial solidaire de l'arbre de commande provoquant, par déplacement linéaire de la tige du vérin, la rotation de chacun des anneaux autour du carter. La rotation d'un anneau de commande est transmise par les billettes correspondantes aux pivots externes des aubes d'un étage les faisant tourner autour de leurs axes.

D'une façon connue, le vérin hydraulique est alimenté en fluide hydraulique et comporte à cet effet une entrée et une sortie de fluide hydraulique. Afin de prévenir toute fuite de fluide hydraulique interne et d'éviter toute fuite de fluide vers la turbine risquant de dégrader les performances de la turbine, de polluer la turbine (contamination des prélèvements d'air), les vérins hydraulique comportent un drain au niveau de chaque arrivée de fluide hydraulique (i.e. au niveau de l'entrée et de la sortie du fluide). Les drains permettent ainsi de récupérer, par gravité, d'éventuelles fuites de fluide hydraulique qui pourraient intervenir lors du fonctionnement du vérin. Un tel vérin hydraulique est décrit notamment dans le document JP53044773.

Il est connu que ces drains sont reliés à des tuyauteries acheminant la fuite vers des réservoirs de récupération aptes à stocker le fluide hydraulique.

Toutefois, en fonction de la position du vérin sur l'architecture de la soufflante et en fonction de l'inclinaison de la turbomachine pouvant varier au cours de son fonctionnement, il arrive que les drains prévus n'assurent pas complètement leur fonction d'évacuation de la fuite hydraulique pouvant survenir.

Dans ce contexte, l'invention vise à résoudre les problèmes mentionnés ci-dessus, en proposant un dispositif hydraulique d'un dispositif de commande permettant d'assurer une évacuation d'une éventuelle fuite de fluide hydraulique quelle que soit la position du vérin sur l'architecture.

A cette fin, l'invention propose un dispositif hydraulique comportant un corps, une tige de piston actionnée par un fluide hydraulique sous pression, un premier conduit de drainage apte au drainage vers l'extérieur d'une fuite interne de fluide hydraulique dans ledit dispositif ; ledit dispositif étant caractérisé en ce qu'il comporte un deuxième conduit de drainage apte au drainage vers l'extérieur de ladite fuite interne de fluide hydraulique dans ledit dispositif : ledit premier conduit et ledit deuxième conduit de drainage étant orientés selon deux directions différentes, chacun desdits conduits communiquant au niveau de l'une de leurs extrémités à l'intérieur dudit corps dudit dispositif.

Grâce à l'invention, la fonction de drainage d'une éventuelle fuite à l'intérieur du dispositif hydraulique est assurée par les deux conduits de drainage quelle que soit la position du dispositif hydraulique et quelle que soit le positionnement du dispositif hydraulique.

Avantageusement, les deux conduits de drainage sont positionnés de façon à ce qu'au moins un conduit est apte à diriger la fuite hydraulique interne vers l'extérieur dudit dispositif par gravité, quelle que soit la position dudit dispositif hydraulique,

Grace à l'invention, le même dispositif hydraulique peut être utilisé et positionné à différents endroits en fonction de l'architecture souhaitée. Ainsi, l'utilisation d'un dispositif hydraulique unique permet de diminuer les coûts de réalisation.

Le dispositif hydraulique selon l'invention peut également présenter une ou plusieurs des caractéristiques ci-dessous, considérées individuellement ou selon toutes les combinaisons techniquement possibles :
- lesdits deux conduits de drainage forme un profil en V ou en Y ;
- ledit dispositif comporte une plaque d'alimentation sur laquelle sont agencées une première amenée et une deuxième amenée de fluide hydraulique dans ledit corps ;
- lesdits conduits de drainage débouchent sur ladite plaque d'alimentation ;
- ledit premier conduit de drainage et ledit deuxième conduit de drainage communiquent avec un troisième conduit interne s'étendant longitudinalement dans ledit corps dudit vérin ;
- ledit dispositif hydraulique est un dispositif hydraulique de changement de pas d'hélice ;
- ledit dispositif hydraulique est un dispositif hydraulique de calage d'aube.

L'invention a également pour objet un dispositif de commande comportant un dispositif hydraulique selon l'invention.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue en perspective d'un dispositif hydraulique de changement de pas d'aubes à calage variable selon l'invention ;
- la figure 2 est une vue en perspective comportant une coupe locale selon le plan de coupe AA' illustré à la figure 1, du dispositif hydraulique de changement de pas d'aubes à calage variable selon l'invention.

Dans toutes les figures, les éléments communs portent les mêmes numéros de référence sauf précision contraire.

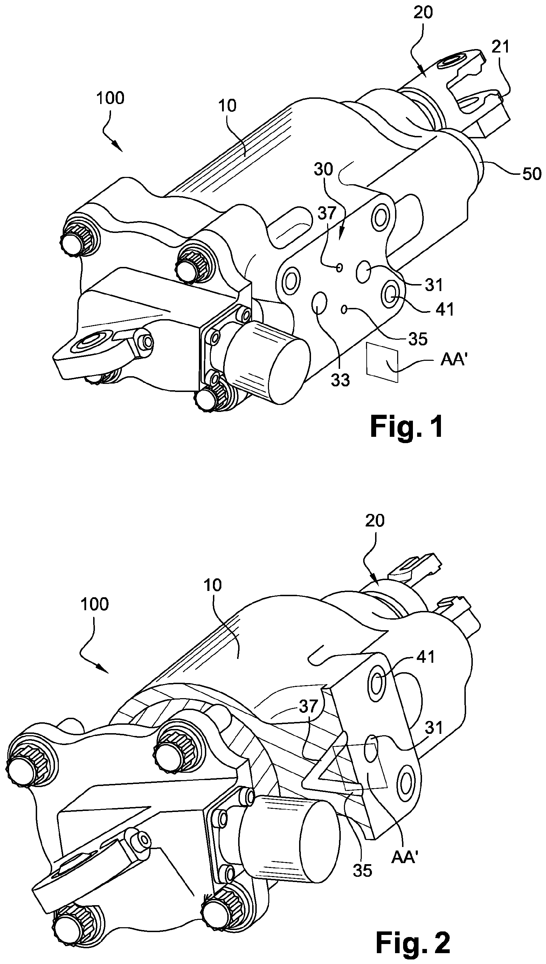

La figure 1 est une vue en perspective d'un dispositif hydraulique de changement de pas d'aubes de turbomachine 100. Plus particulièrement, le dispositif hydraulique est un vérin hydraulique destiné à modifier l'angle de calage d'aubes de soufflante d'une turbomachine (non représentée) et s'intégrant dans un dispositif de commande de variation de pas des aubes de soufflante.

Chaque aube à calage variable comporte un pivot cylindrique à chacune de ses extrémités, ces pivots définissant l'axe de rotation de l'aube. Le pivot radialement externe de l'aube est engagé dans une cheminée cylindrique d'un carter annulaire externe qui est relié au moyen d'une biellette à un anneau de commande monté autour du carter annulaire. L'anneau de commande est quant à lui relié par un levier à un arbre de commande actionné par un vérin hydraulique. De façon générale, l'arbre de commande s'étend parallèlement à l'axe du carter et peut être relié à un ou plusieurs anneaux de façon à commander un ou plusieurs étages d'aubes avec un seul vérin.

Le vérin hydraulique 100 est formé de façon classique par un corps 10 et par une tige de piston 20 du vérin 100 actionnée par la pression d'un fluide hydraulique circulant à l'intérieur du vérin 100.

La tige de piston 20 comporte à son extrémité libre une chape en forme de U reliée à l'arbre de commande par un bras radial solidaire de l'arbre de commande provoquant, par déplacement linéaire de la tige du vérin, la rotation de chacun des anneaux autour du carter. La rotation d'un anneau de commande est transmise par les billettes correspondantes aux pivots externes des aubes d'un étage les faisant tourner autour de leurs axes.

Le vérin 100 comporte deux amenées 31, 33 de fluide hydraulique faisant office à la fois d'entrée et de sortie de fluide hydraulique en fonction du sens de déplacement de la tige du piston 20.

Avantageusement, les deux amenées 31 et 33 sont regroupées au même endroit sur une plaque d'alimentation 30 apte à être connectée à un bloc d'alimentation (non représenté) par des moyens de solidarisation 41. Le regroupement des amenées de fluide hydraulique sur une même plaque d'alimentation 30 a pour avantage de réduire l'encombrement des tuyauteries d'amenées de fluide hydraulique dans l'environnement du vérin hydraulique 100 et donc de faciliter sa maintenance.

Le vérin 100 comporte également deux conduits 35 et 37 débouchant au niveau de la plaque d'alimentation 30. Les deux conduits 35, 37 sont des conduits de drainage permettant d'évacuer une éventuelle fuite de fluide hydraulique à l'intérieur du vérin 100, et notamment à proximité des arrivées de fluide hydraulique 31, 33.

Avantageusement, les deux conduits de drainage 35, 37 sont aménagés de façon à avoir une des leurs extrémités communicante à l'intérieur du vérin 100.

Selon l'exemple de réalisation illustré aux figures 1 et 2, les deux conduits de drainage 35, 37 sont agencés de façon à former un profil en Y ou encore en V dans un plan perpendiculaire au déplacement longitudinal de la tige de piston 20. Toutefois, les deux conduits de drainage 35, 37 peuvent également être agencés de façon à former un profil en Y ou en V dans tout autre plan.

Les deux conduits de drainage 35, 37 communiquent également avec un troisième conduit (non représenté) agencé à l'intérieur du vérin s'étendant sur une grande partie de la longueur du corps du vérin 10 et apte à acheminer les éventuelles fuites de fluide hydraulique du vérin vers les conduits de drainage 35, 37. Les fuites sont ainsi canalisées et acheminées vers un réservoir de récupération (non représenté) extérieur au vérin 100.

Les différents conduits de drainage 35, 37 et le troisième conduit sont réalisés par un procédé de perçage. L'extrémité débouchant du troisième conduit étant bouchée en surface par un bouchon 50 apte à effectuer l'étanchéité requise.

Ainsi, les deux conduits de drainage 35, 37 formant un conduit en V ou en Y permettent d'assurer un drainage dirigé vers le bas permettant à une fuite de s'écouler par gravité vers l'extérieur du vérin afin d'être récupérée dans un réservoir dédié quelle que soit la position du vérin sur une architecture turbomachine et quelle que soit la position de la turbomachine en utilisation (i.e. lors d'inclinaison exagérée de l'avion).

Ainsi, grâce au dispositif selon l'invention, le nombre de pièces différentes et nécessaires à la réalisation du dispositif de commande de changement de pas d'aubes, ou plus généralement d'hélices, est réduit ce qui permet de simplifier la gamme de fabrication d'un tel dispositif tout en diminuant les coûts de réalisation. En effet, grâce à l'architecture avantageuse du dispositif hydraulique selon l'invention, il n'est plus nécessaire de concevoir une pluralité de vérins spécifiques, dont la conception du schéma de drainage est spécifique à la position du vérin sur la soufflante, pour assurer de manière complète et sécurisée le drainage d'une fuite hydraulique quelle que soit la position du vérin.

L'invention a été principalement décrite pour un dispositif hydraulique de changement de pas d'aubes à calage variable de soufflante de turbomachine ; toutefois, l'invention est également applicable à tout système muni d'hélices tel que les éoliennes, les ventilateurs industriels ou encore les turboréacteurs.

Les autres avantages de l'invention sont notamment les suivants :
- réduction des coûts de réalisation ;
- réduction du temps de réalisation ;
- simplification de la gamme de fabrication ;
- réduction des coûts des outillages ;
- réduction des coûts matière.

## Revendications

1. Dispositif hydraulique (100) comportant un corps (10), une tige de piston (20) actionnée par un fluide hydraulique sous pression, un premier conduit de drainage (35) apte au drainage vers l'extérieur d'une fuite interne de fluide hydraulique dans ledit dispositif (100) ; ledit dispositif comportant un deuxième conduit (37) de drainage apte au drainage vers l'extérieur de ladite fuite interne de fluide hydraulique dans ledit dispositif (100) ; ledit dispositif étant **caractérisé en ce que** ledit premier conduit (35) et ledit deuxième conduit (37) de drainage sont orientés selon deux directions différentes, chacun desdits conduits (35, 37) présentant une extrémité commune et lesdits conduits communiquant entre eux au niveau de leur extrémité commune à l'intérieur dudit corps (10) dudit dispositif (100).

2. Dispositif hydraulique (100) selon la revendication 1 **caractérisé en ce que** lesdits deux conduits (35, 37) de drainage forme un profil en V ou en Y.

3. Dispositif hydraulique (100) selon l'une des revendications 1 à 2 **caractérisé en ce que** ledit dispositif comporte une plaque d'alimentation (30) sur laquelle sont agencées une première amenée (31) et une deuxième amenée (33) de fluide hydraulique dans ledit corps (10).

4. Dispositif hydraulique (100) selon la revendication 3 **caractérisé en ce que** lesdits conduits de drainage (35, 37) débouchent sur ladite plaque d'alimentation (30).

5. Dispositif hydraulique (100) selon l'une des revendications 1 à 4 **caractérisé en ce que** ledit premier conduit de drainage (35) et ledit deuxième conduit de drainage (37) communiquent avec un troisième conduit interne s'étendant longitudinalement dans ledit corps (10) dudit vérin (100).

6. Dispositif hydraulique (100) selon l'une des revendications 1 à 5 **caractérisé en ce que** ledit dispositif hydraulique (100) est un dispositif hydraulique de changement de pas d'hélice.

7. Dispositif hydraulique (100) selon l'une des revendications 1 à 5 **caractérisé en ce que** ledit dispositif hydraulique (100) est un dispositif hydraulique de calage d'aube.

8. Dispositif de commande **caractérisé en ce qu'**il comporte un dispositif hydraulique selon l'une des revendications 1 à 7.

## Patentansprüche

1. Hydraulikvorrichtung (100), aufweisend einen Körper (10), eine von einem Hydraulikfluid unter Druck betätigte Kolbenstange (20), einen ersten Drainagekreis (35), der zur Drainage nach außen eines inneren Abgangs von Hydraulikfluid in der Vorrichtung (100) befähigt ist,
wobei die Vorrichtung einen zweiten Drainagekreis (37) aufweist, der zur Drainage nach außen des inneren Abgangs von Hydraulikfluid in der Vorrichtung (100) befähigt ist,
wobei die Vorrichtung **dadurch gekennzeichnet ist, dass** die erste Drainageleitung (35) und die zweite Drainageleitung (37) in zwei verschiedenen Richtungen ausgerichtet sind, wobei jede der Leitungen (35, 37) ein gemeinsames Ende aufweist und wobei die Leitungen im Bereich ihres gemeinsamen Endes im Innern des Körpers (10) der Vorrichtung (100) miteinander kommunizieren.

2. Hydraulikvorrichtung (100) nach Anspruch 1, **dadurch gekennzeichnet, dass** die zwei Drainageleitungen (35, 37) ein V- oder ein Y-Profil bilden.

3. Hydraulikvorrichtung (100) nach einem der Ansprüche 1 bis 2, **dadurch gekennzeichnet, dass** die Vorrichtung eine Versorgungsplatte (30) aufweist, auf welcher eine erste Zufuhr (31) und eine zweite Zufuhr (33) von Hydraulikfluid in den Körper (10) ausgebildet sind.

4. Hydraulikvorrichtung (100) nach Anspruch 3, **dadurch gekennzeichnet, dass** die Drainageleitungen (35, 37) auf der Versorgungsplatte (30) ausmünden.

5. Hydraulikvorrichtung (100) nach einem der Ansprüche 1 bis 4, **dadurch gekennzeichnet, dass** die erste Drainageleitung (35) und die zweite Drainageleitung (37) mit einer dritten inneren Leitung kommunizieren, die sich längs in dem Körper (10) des Zylinders (100) befindet.

6. Hydraulikvorrichtung (100) nach einem der Ansprüche 1 bis 5, **dadurch gekennzeichnet, dass** die Hydraulikvorrichtung (100) eine Schaufelteilungsänderungs-Hydraulikvorrichtung ist.

7. Hydraulikvorrichtung (100) nach einem der Ansprüche 1 bis 5, **dadurch gekennzeichnet, dass** die Hydraulikvorrichtung (100) eine Schaufelverkeilungs-Hydraulikvorrichtung ist.

8. Steuervorrichtung, **dadurch gekennzeichnet, dass** sie eine Hydraulikvorrichtung nach einem der Ansprüche 1 bis 7 aufweist.

## Claims

1. Hydraulic device (100) comprising a body (10), a piston rod (20) actuated by a pressurised hydraulic fluid, a first drainage channel (35) for externally draining an internal leakage of hydraulic fluid in said device (100);
said device comprising a second drainage channel (37) for externally draining said internal leakage of hydraulic fluid in said device (100);
said device being **characterised in that** said first (35) and said second (37) drainage channels are oriented in two different directions, each of said channels (35, 37) having a common end and said channels communicating together at the level of their common end inside said body (10) of said device (100).

2. Hydraulic device (100) according to claim 1 **characterised in that** said two drainage channels (35, 37) form a V-shaped or Y-shaped profile.

3. Hydraulic device (100) according to one of claims 1 to 2 **characterised in that** said device comprises a supply plate (30) on which are arranged a first feed (31) and a second feed (33) of hydraulic fluid into said body (10).

4. Hydraulic device (100) according to claim 3 **characterised in that** said drainage channels (35, 37) emerge on said supply plate (30).

5. Hydraulic device (100) according to one of claims 1 to 4 **characterised in that** said first (35) and said second (37) drainage channels communicate with a third internal channel extending longitudinally in said body (10) of said actuating cylinder (100).

6. Hydraulic device (100) according to one of claims 1 to 5 **characterised in that** said hydraulic device (100) is a blade pitch-change hydraulic device.

7. Hydraulic device (100) according to one of claims 1 to 5 **characterised in that** said hydraulic device (100) is a blade setting hydraulic device.

8. Control device **characterised in that** it comprises a hydraulic device according to one of claims 1 to 7.
